# EUROPEAN PATENT APPLICATION

(11) **EP 0 902 383 A2**
(43) Date of publication of application: **17.03.1999**
(21) Application number: 98306734.9
(22) Date of filing: 21.08.1998
(51) Int. Cl.: G06F 17/60

(54) **Communication network**

(30) Priority: 10.09.1997 GB 9719289
(71) Applicant: NCR INTERNATIONAL INC., Dayton, Ohio 45479 (US)
(72) Inventor: Emmott, Stephen J., 65 Hopton Street, London, SE1 9JL (GB); Treleaven, Philip C., London, SW18 1PX (GB); Johnson, Graham I., Tayport, Fife, DD6 9AA (GB)
(74) Representative: Cleary, Fidelma

(57) **Abstract**

In an open communications network such as the Internet, an interface server site (40) provides advertising for consumer products. The interface server site (40) has virtual character profiles of a central character and connected characters and additionally has a virtual environment within which the central character and the connected characters interact. The central character is based on the consumer affinity characteristics of a target segment of consumers to whom it is desired to advertise the consumer products.

The virtual central character has a portrayed lifestyle in which that character is depicted with the consumer products in an environment which the target segment of consumers will identify as relevant to them. Electronic transaction facilities are provided to enable a consumer to purchase products depicted in the virtual environment and selected by the consumer. Electronic mail facilities are provided to the virtual characters at the interface server site (40).

## Description

The present invention relates to communications networks and in particular to an open communications network enabling users of remote terminals to access information relating to products or services and to conduct transactions over the open communications network.

In recent years, communications networks such as the Internet have become a common source of news and information for computer users. The Internet comprises many thousands of information server sites and millions of client subscriber sites which use the world-wide public telecommunications network to communicate with each other. The Internet commonly uses a client-server based information presentation system known as the "World Wide Web" (WWW) also referred to as The Web. In The Web, a server site or "site" may provide a series of screens or "pages" of information which a client may access in sequence by sending appropriate request signals over the Internet. The Web has a standard protocol for information transfers known as the HyperText Transfer Protocol (HTTP) and request signals from a client and data signals from a server are in a format known as HyperText Mark-up Language (HTML).

The Internet presents considerable business opportunities for commercial enterprises world-wide. Many Web sites have been set up having pages which advertise and provide information about various consumer products or services. Many such sites are equipped so as to allow a client accessing the site to place an order and pay for a product or service which is subsequently delivered to the client. However, although the technological infrastructure for conducting electronic commerce over the Internet is in place, the number of consumers taking advantage of such facilities is relatively low in comparison to the number of users of the Internet. With the exception of a few areas such as for example the purchase of computer products and books, the Web has not proved a successful marketing and commercial transaction tool for most commercial enterprises. In short, most enterprises conducting commerce on the Internet are currently unable to develop effective commercial relationships with consumers.

One of the most significant reasons for this lack of success is that many sites offering electronic commerce are based on a 'virtual shopping mall' metaphor and are perceived by consumers as boring and unrealistic. A further problem is that many enterprises experience difficulties in attracting specific groups of consumers to their site. Such specific groups of consumers are identified as those most likely to purchase particular products or services and on which particular marketing campaigns are focused. Therefore, in order to maximize the potential of the Internet as a commercial tool, there is a need to attract relevant target groups of consumers to relevant commercial Web sites.

It is an object of the present invention to provide an effective means by which transaction-based electronic commerce can be conducted via the Internet and in which the problems discussed above are alleviated.

It is a further object of the present invention to provide an effective interface between specific target subscribers at remote client subscriber sites and target information server sites which provide information in relation to specific consumer products and services of relevance to a target consumer. Such an interface facilitates the development of relationships between commercial enterprises and specific consumer segments on the Internet.

According to as first aspect of the present invention, there is provided a method of advertising goods and services in an open communications network comprising a plurality of client subscriber sites interconnected to a plurality of information server sites, the method characterized by the steps of:
identifying a target subscriber group,
determining a set of consumer affinity characteristics of the target subscriber group,
providing, at an interface advertising information server site, an interactive display of a role model portraying the said affinity characteristics in a role as consumer of goods and services, and
establishing an interactive communication link to the client subscriber sites providing interactive access from the client subscriber sites to goods and services portrayed in the said interactive display.

According to a further aspect of the invention, there is provided an Internet advertising web site, characterized by importation of:
a first central character in Virtual Reality Markup Language format,
a plurality of connected characters in Virtual Reality Markup Language format, the first central character having a character profile based on a group of consumer affinity characteristics and the connected characters having character profiles based around the character profile of the first central character profile,
a virtual environment including scenes of said first central character and said connected characters interacting with said virtual environment,
said virtual environment including objects specified by Uniform Resource Locators, and
electronic transaction facilities to place an order for one of said objects specified in the said virtual environment.

An embodiment of the present invention will now be described with reference to the accompanying drawings in which:
Figure 1 is a block diagram representing an open communications network according to the present invention;
Figure 2 is a flow diagram representing the generation of a target advertising information web site;
Figure 3A and 3B are examples of computer generated central characters; and
Figure 4 is an example of a page from the target advertising information web site as accessed by a remote client subscriber.

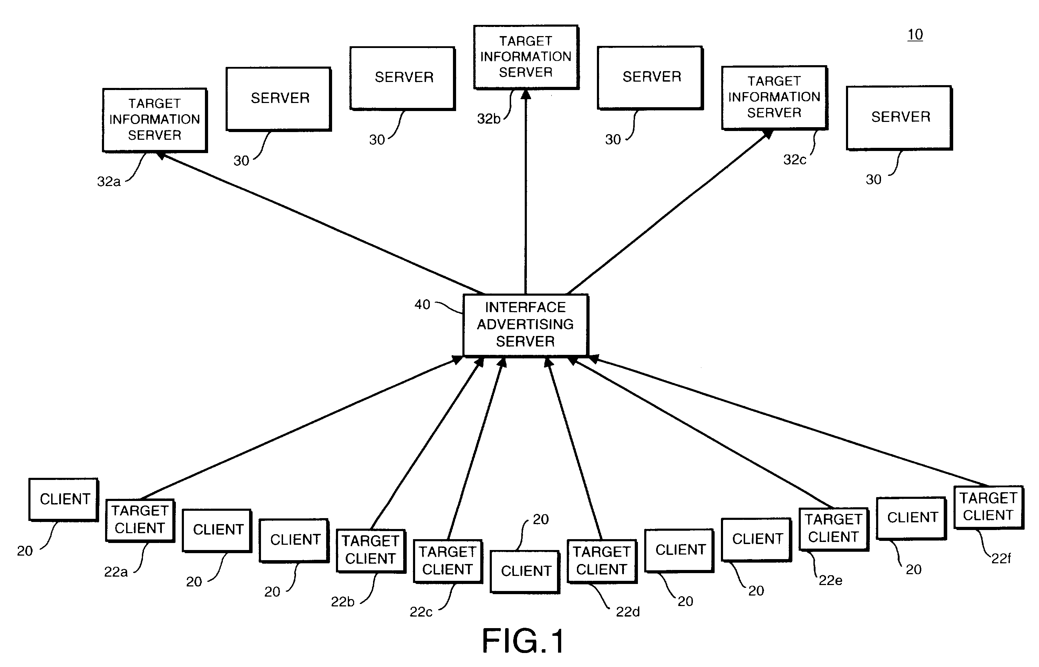

Referring to Figure 1, the communications network 10 includes a plurality of remote client subscriber sites 20, the Internet WWW communication network and a plurality of WWW information server sites 30. The plurality of client and information server sites include a plurality of target client subscriber sites 22a, 22b 22c ... and target information server sites 32a, 32b, 32c .... These target information server sites 32a, 32b, 32c .... are Web sites of specific commercial enterprises, the pages of which advertise and provide information about consumer products or services. These sites 32a, 32b, 32c .... may also be equipped so as to allow clients which access these pages to conduct transactions; i.e. to order particular products or services and to pay for them over the Web. The target client subscriber sites 22a, 22b 22c ... represent the principle consumer segment for the consumer products or services of the target information server sites 32a, 32b, 32c ..... In other words, the target client subscriber sites 22a, 22b 22c ... are the consumers to which the commercial enterprises at the target information server sites 32a, 32b, 32c ..... wish to market and sell their products and services. The communications network 10 also includes a interface advertising server site 40, the function of which is to attract the target client subscribers and to facilitate communication between the target client subscriber sites 22a, 22b 22c ... and the target information server sites 32a, 32b, 32c......

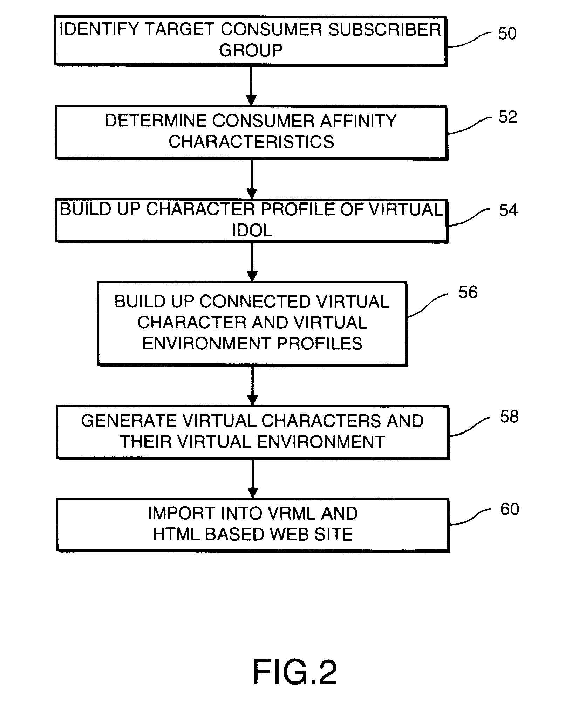

The generation of an interface advertising server site 40 will now be described with reference to the flow diagram in Figure 2. In Step 50, a target subscriber group is identified. The target subscriber group is a number of consumers having one or more specific common consumer affinity characteristics. For example, a subscriber group may be a number of people having a certain lifestyle, such as people who buy a certain product (e.g. a brand of clothing or footwear, compact discs of a particular artist or type of music), people who own a car of a particular brand, people who travel abroad to certain destinations or who have certain interests etc. Alternatively, a subscriber group may be a number of people who are interested in or who idolize a certain high profile personality or group of personalities such as a popstar or band, a sportsperson or a team, actors, models etc. Such a target subscriber group is identified using known market analysis techniques.

In Step 52, the consumer affinity characteristics of the identified target subscriber group are determined. Consumer affinity characteristics may be defined as the interests, values and lifestyle aspirations of the consumer segment. For example, on analysis of a target subscriber group which buys a certain brand of footwear, it may be found that the majority of the segment are male, belong to a certain age group, enjoy watching football, eat certain types of food products, listen to certain types of music, watch certain TV programs or films, socialize in certain environments, idolize certain high-profile personalities, have certain moral and political opinions etc. Analysis of the target subscriber group is carried out using known scientific socio-economic and psychosocial models in order to determine a broad spectrum of consumer affinity characteristics.

On determination of the consumer affinity characteristics of the identified target subscriber group, a virtual idol character profile is built up based on these consumer affinity characteristics in Step 54. This character profile combines the most predominant consumer affinity characteristics of the target subscriber group into a single central character or group of characters (idols). For example, the central character profile built up from the consumer affinity characteristics of the target subscriber group that bought a certain brand of footwear may include the following information:
- **Sex :**: **Male;**
- **Age :**: **20 years old;**
- **Status :**: **Single;**
- **Employment:**: **Full Time Sales Assistant**
- **Salary :**: **$2000 per month**
- **Home :**: **One bedroom apartment**
- **Status :**: **Cohabiting with Girlfriend**
- **Family :**: **Divorced Parents**
**Two Sisters;**
- **Relationships :**: **Two close male friends;**
- **Lifestyle :**: **Smoker (cigarette brand, number per day)**
**Alcohol (brands, no. of units)**
**Music (favourite artists, groups)**
**Food (eating habits, favourite foods)**
**Fashion (dress code, fashion brands)**
**Social life (clubs, bars, restaurants)**

In addition to the central character profile, further connected character profiles and an environment profile are built up in Step 56. The connected character profiles represent other characters who are based around the life of the central character in some way (e.g. partner, friend, colleagues, family etc.) and are also determined from the consumer affinity characteristics of the target consumer group. The environment profile represents the environment in which the central and connected characters exist (e.g. homes, workplaces, shops, restaurants, bars, clubs, etc.) and is also determined from the consumer affinity characteristics of the target consumer group.

It should be understood that the aim of building up character and environment profiles in this way is to ensure that the central character and environments matched closely with the lifestyle aspirations of the target consumer segment (goes to particular clubs, wears certain fashion brands, has particular interests and attitudes). The life of the central character should match the issues perceived by the target consumer segment as being of real relevance to them (e.g. relationship problems, employment issues, financial problems etc.).

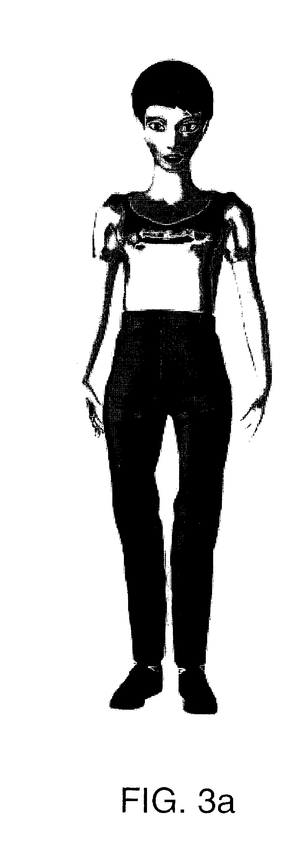

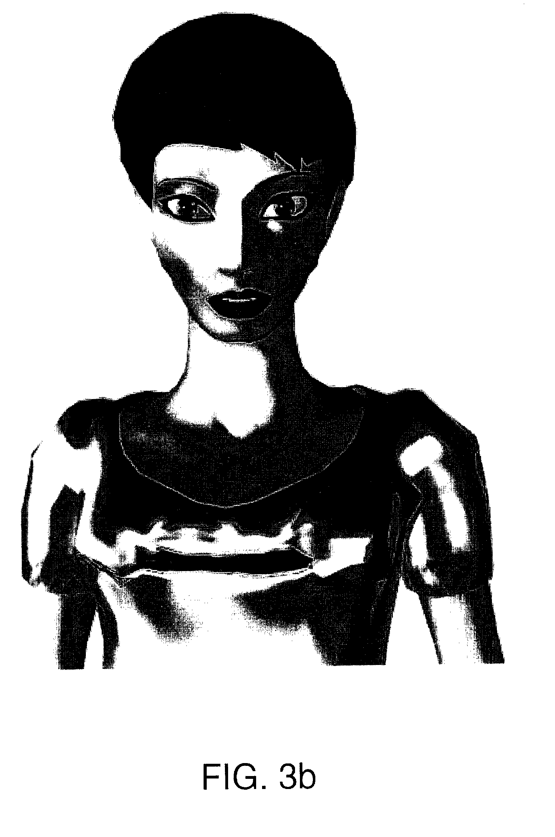

In Step 58, virtual characters are created based on the central character profile and the character profiles of all the other characters in the life of the central character. Known anthropomorphic frames and character animation applications (e.g. 3D-Studio Max) are used to create these virtual characters. Skin and texture mapping is also achieved using known techniques (e.g. Adobe Photoshop and Avatar Maker). Examples of computer-generated central characters or "virtual idols" are shown in Figure 3A, 3B and 3C. The virtual characters created are either photo-realistic renderings of a fictitious or actual person or high-quality caricatures or a combination of both. A variety of software applications are available in the marketplace which may be used to achieve the same or similar effects.

In Step 60 all the virtual characters and their environment are imported into a Hyper-text Markup Language HTML) and Virtual Reality Markup Language (VRML) based Web Site (VRML is a standard signal format for virtual reality applications), which constitutes the interface advertising server site 40. Since all characters and environments are rendered in VRML, interaction of the characters with each other and with different environments is possible. The interface server site 40 also includes HTML frames (preformatted windows) so that different scenes of the central character interacting with other characters or with different environments can be depicted. For example, the central character can be animated to move around in any chosen environment (e.g. a clothes shop, a bookstore, a cafe, a bar etc.). An audio application is also included so that the characters may speak to each other or make statements. Various known Internet audio streaming applications can be used.

The communications network 10 is designed to run using any standard Internet browser (e.g. Netscape Navigator/communicator or Microsoft Explorer) An electronic mail facility is also provided so that client subscribers can communicate with the virtual characters at the interface Web site 40. Client subscribers may also speak to the characters themselves.

The Internet uses Uniform Resource Locators (URLs) for specifying objects on the Internet. A URL string denotes both the server site and the particular file or page on that server site. The use of URLs to access specified server sites and pages is well known and will not be described herein. All aspects of the central and other connected characters and the environment in which they live (e.g. clothes worn, shoes worn, places frequented, shops visited, etc.) are referenced by URL strings (HTML co-ordinates). This means that it is possible to select objects in the virtual world so as to connect to another Web site denoted by the URL string. This web site constitutes a target information server site 32a, 32b, 32c ......, the pages of which advertise and carry information about the object selected and/or other similar or related objects. The site 32a, 32b, 32c.... may also be equipped with electronic transaction facilities where an order may be placed for a selected product or service and payment made over the Internet. Any suitable type of in-line purchasing systems may be used and may include known On-line Analytical Process (OLAP) applications for stock accessibility and transaction processing using Secure Electronic Transactions.

The operation of the communications network 10 of the present invention will be described. A user at one of the remote target client subscriber sites 22a, 22b, 22c....can access the interface advertising server site 40 through the Internet WWW communication network. It should be understood that such a user represents a member of the target subscriber group and that this user is likely to be attracted to the interface advertising server site 40 as the central character and environment are likely to appeal to the user. This may be thought of as analogous to a soap opera on television in that members of the public are attracted to, relate to or develop an affinity for the fictitious soap characters and their environment and lifestyles. The central character of the interface advertising server site 40 in effect represents a "virtual idol" or a role model.

The user of the target client site 22a, 22b, 22c....accesses the interface advertising server site 40 in the normal way by selecting the appropriate Uniform Resource Locator (URL) which denotes both the interface advertising server site 40 and the particular file or page on that server. On accessing the pages of the interface advertising server 40, the user "enters" the virtual world of the central character ("virtual idol") in a similar manner to viewing a soap opera on television. In this virtual world, the central character interacts with the connected characters and the virtual environment. Each character may be thought of as having a personality and acts out a particular role. The central character (virtual idol) plays the leading role and "acts out" a certain "life", while the connected characters have roles in the life of the central character. Each connected character has its own "life" which is related to that of the central character in some way. The "life" of the central character and those of the connected characters is different each day and develops over time in a similar manner to the lives of real people or fictitious soap opera characters.

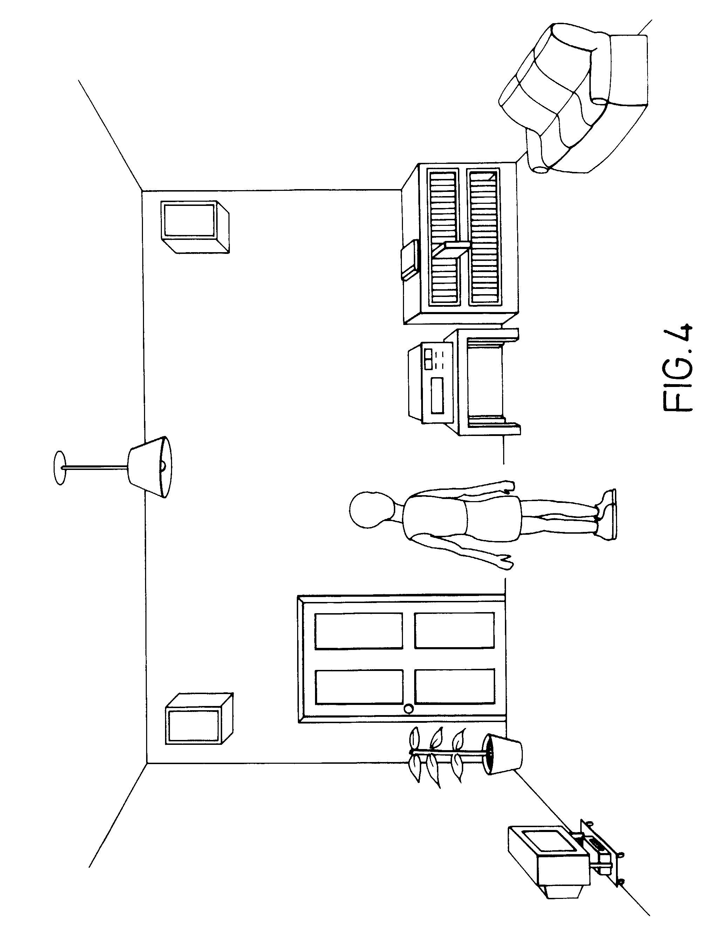

The interface advertising server site 40 comprises an interactive display of the virtual idol portraying the affinity characteristics in a role as a consumer of goods and services. A user may communicate with the central character (virtual idol) or other characters by sending them electronic mail in a similar manner to sending fan mail to a soap opera character or a real-life idol. In contrast to viewing a soap opera however, a user may interact with the central or other characters and their environment. For example, as is shown in Figure 4, if the central character (the "idol") puts on a compact disc to listen to music, a user may select to listen to the compact disc by clicking on the virtual CD player displayed on the display screen at the client site using a mouse device and a sample of the music being listened by the central character too can be heard.

If the user really likes the music and wishes to purchase that compact disc, they may click on the compact disc. By clicking on the compact disc, the Web pages described by the URL string associated with the compact disc are accessed by the interface server and the user becomes connected to the target information Web site 32a, 32b, 32c.... which advertises and provides information about the compact disc and about the artist or group which have made the recording. The user can place an order and pay for the compact disc over the Internet in the known way.

Similarly, by selecting the shoes of the central or other connected characters, connection is made to a target information Web site 32a, 32b, 32c...., advertising and providing details of the shoes and other footwear and offering the possibility to purchase such products over the Internet. Restaurants, clubs, bars, theatres, museums and other establishments may also be marketed in the same way. For example, if the central character visits an art gallery one day, the gallery environment or a particular piece of art may be selected by a user. Connection is then made to the appropriate target Web site 32a, 32b, 32c.... where further information or publicity is available. Tickets may be purchased or reservations made at this Web site 32a, 32b, 32c....

In this way an interactive communication link is established between the interface advertising 40 and the client subscriber sites 22a, 22b, 22c.... which provides interactive access from the client subscriber sites 22a, 22b, 22c.... to the consumer goods and services portrayed in the interactive display.

The present invention is advantageous in that it provides an effective way of interfacing consumers with information about products and services which are likely to be relevant to their lives over the Internet. At the same time, the invention provides an effective way for commercial enterprises offering consumer products and services to reach a specific target consumer segment and to develop commercial relationships by capturing the attention and affinity of that specific consumer segment to an appropriate "virtual idol" on the Internet. The lifestyle and the character of the "virtual idol" are defined by the commercial and lifestyle interests of the target consumer segment. Since the life of the "virtual idol" changes from day to day and develops, the attention and affinity of the target consumer segment is maintained.

Moreover, it allows life-style related products and services to be marketed and purchased over the Internet through use or interaction of the "virtual idol" with such products or services (e.g. the idol character that the consumer segment are 'attracted to' wears specific brands of clothes, goes to this or that restaurant, buys x, y, z CDs).

It should be understood that the central character ("virtual idol") may be a group of characters of equal importance in the virtual world (e.g. a sports team, popgroup or group of friends) rather than a single character. Connected characters will be associated with the life of each central character.

In a further embodiment of the invention, pages carrying information related to the products and services which may be selected by a user (i.e. the lifestyle related products or services of the central character) are present at the interface site itself. Hence, other Web sites do not have to be accessed in order to obtain information or to make purchases. Alternatively, a simple database of the products and services available may be downloaded on the interface site from which the appropriate information is retrieved when a user selects an object.

## Claims

1. A method of advertising goods and services in an open communications network (10) comprising a plurality of client subscriber sites (22a, 22b, 22c....) interconnected to a plurality of information server sites (32a, 32b, 32c...), the method characterized by the steps of:
identifying a target subscriber group,
determining a set of consumer affinity characteristics of the target subscriber group,
providing, at an interface advertising information server site (40), an interactive display of a role model portraying the said affinity characteristics in a role as consumer of goods and services, and
establishing an interactive communication link to the client subscriber sites (22a, 22b, 22c ....) providing interactive access from the client subscriber sites (22a, 22b, 22c... ) to goods and services portrayed in the said interactive display.

2. A method according to claim 1, characterized in that the role model is a virtual character.

3. A method according to claim 2, characterized in that the role model is a virtual character portrayed in a virtual environment.

4. A method according to claim 3, characterized in that the virtual character is a central character in the virtual environment and the method includes the further step of portraying the central character interacting with connected characters in the virtual environment.

5. A method according to claim 1, characterized in that the step of establishing the interactive communication link includes the further steps of;
providing interactive access to communications with the role model, and
providing interactive access to consumer product information portrayed by the role model.

6. A method according to claim 1, characterized by the further step of providing on-line electronic transaction facilities for the goods and services portrayed in the interactive display.

7. A method according to claim 1, characterized in that the step of providing at an interface advertising information server site (40), an interactive display of a role model portraying the said affinity characteristics in a role as consumer of goods and services includes the steps of:
building a virtual idol character profile based on the said consumer affinity characteristics;
building virtual connected character profiles connected to a virtual lifestyle of the said idol character profile;
building a virtual environment profile matched to the virtual idol profile and the connected character profiles, the said virtual environment including products forming part of the lifestyle of the virtual idol; and
importing all the virtual characters and their virtual environment into an Internet web site (40).

8. A method according to claim 7, comprising the further step of including HTML frames in the said interface advertising web site (40) depicting different scenes of the said virtual idol interacting with the connected characters.

9. A method according to claim 7, comprising the further step of specifying goods portrayed in the virtual environment by a Uniform Resource Locator string.

10. A method according to claim 7, comprising the further step of providing an electronic mail facility to the characters in the interface advertising site (40).

11. An Internet advertising web site (40), characterized by importation of:
a first central character in Virtual Reality Markup Language format,
a plurality of connected characters in Virtual Reality Markup Language format, the first central character having a character profile based on a group of consumer affinity characteristics and the connected characters having character profiles based around the character profile of the first central character profile,
a virtual environment including scenes of said first central character and said connected characters interacting with said virtual environment,
said virtual environment including objects specified by Uniform Resource Locators, and
electronic transaction facilities to place an order for one of said objects specified in the said virtual environment.
